# EUROPEAN PATENT APPLICATION

(11) **EP 3 848 607 A2**
(43) Date of publication of application: **14.07.2021**
(21) Application number: 20213995.2
(22) Date of filing: 15.12.2020
(51) Int. Cl.: F16F 1/393, B60G 1/00, F16B 4/00

(54) **ELASTOMERIC BEARING FOR A SUSPENSION ASSEMBLY**

(30) Priority: 19.12.2019 US 201962950355 P
(71) Applicant: Schaublin SA, 2800 Delémont (CH)
(72) Inventor: Charmillot, Philippe, 2832 Rebeuvelier (CH); Otis, Marc, 2800 Delémont (CH)
(74) Representative: AWA Denmark A/S

(57) **Abstract**

An elastomeric bearing (10) includes an inner member (12) that has a spherical exterior surface and is symmetric about a central axis (C) and a hollow annular outer structure (14) that is axially split thereby forming a first outer segment (14A) and a second outer segment (14B). The first outer segment (14A) and second outer segment (14B) form a substantially cylindrical exterior surface. One or more shim structures (16, 18) are formed around the inner member (12) and are disposed at least partially inside the hollow annular outer structure. The shim structure (16, 18) has a radially outward facing surface and a radially inward facing surface. One or more layers (20, 22, 24) of elastomeric material are disposed on each of the radially outward facing surface and the radially inward facing surface.

## Description

### Technical Field

The present invention is directed to an elastomeric bearing with a split outer ring and an inner member with shim layers and layers of elastomeric materials disposed between the outer ring and the inner member, and more specifically to an elastomeric bearing with two shim layers for installation into a support linkage for use in a rail car suspension assembly.

### Background

Support linkages, particularly those incorporated into rail car suspension assemblies, are subject to significant reverse loading during operation. In other words, bearings incorporated into support linkages must withstand reversing loads along a longitudinal axis thereof, rotational forces in alternating directions or movement in both the clockwise and counterclockwise directions about either of two central axes of the bearing, which causes significant stress on components of the bearing. The opposite movements of the bearing about the central axes also impedes the ability of the bearing to remain fixed within the bore of the support linkage. The alternating angular movement of the inner member often results in movement of the bearing outer ring relative to the bore of the support linkage.

Methods of inserting elastomeric bearings in bores subject to reverse loading, such as is the case with support linkages, typically require heating of the support linkage to insert a bearing with an adequate interference fit between the bearing and the bore. This heating is an additional procedure that complicates assembly and can result in changes to the material properties affecting the strength and reliability of the support linkage and the connection between the bearing and the support linkage. The heating can also make the requisite interference fits between the bearing and bore difficult to achieve.

As a result, there exists a need in the art for an elastomeric bearing that accommodates reverse loading without requiring complicated assembly methods that impede the functionality of the bearing and surrounding member.

### Summary

The present invention includes an elastomeric bearing including an inner member that has a spherical exterior surface and is symmetric about a central axis C and a hollow annular outer structure that is axially split thereby forming a first outer segment and a second outer segment. The first outer segment and second outer segment form a substantially cylindrical exterior surface. One or more shim structures are formed around the inner member and are disposed at least partially inside the hollow annular outer structure. The shim structure has a radially outward facing surface and a radially inward facing surface. One or more layers of elastomeric material are disposed on each of the radially outward facing surface and the radially inward facing surface.

In some embodiments, the shim structure(s) include a first shim structure and a second shim structure. A portion of the first shim structure has a first spherical contour. The first shim structure is axially split, formed around the inner member and disposed at least partially inside the hollow annular outer structure. A portion of the second shim structure has a second spherical contour. The second shim structure is axially split, formed around the first shim structure and disposed at least partially inside the hollow annular outer structure. One or more layers of an elastomeric material including a first layer of elastomeric material bonded to the inner member and the first shim structure and extending continuously along the first shim structure; a second layer of the elastomeric material bonded to the first shim structure and the second shim structure and extending continuously along the second shim structure; and a third layer of the elastomeric material bonded to the second shim structure and the hollow outer structure and extending continuously along the hollow outer structure.

In some embodiments, in a relaxed state the first outer segment and the second outer segment are separated by a first gap and a second gap. Each of the first gap and the second gap is of a magnitude sufficient to allow the first outer segment and the second outer segment to engage each other in a compressed state to compress the first outer segment and the second outer segment over the first layer, the second layer and the third layer of the elastomeric material to a predetermined compression and to configure the cylindrical exterior surface of the outer structure for press fitting into a bore of a housing and maintaining the outer structure in a fixed relation to the housing.

In some embodiments, the first outer segment and a second outer segment abut one another along circumferentially facing surfaces thereof.

In some embodiments, the abutment of first outer segment and a second outer segment is configured to limit compressive forces on the at least one layer of elastomeric material.

In some embodiments, the abutment of first outer segment and a second outer segment is configured to establish an interference fit of the hollow annular outer structure in a bore of a housing.

In some embodiments, the shim structure(s) (e.g., the first shim structure and/or the second shim structure) include at least two gaps therein which have opposing circumferentially facing surfaces that extend axially along the shim structures, for example the gaps have a spacing of about 5 mm to about 10 mm.

In some embodiments, the predetermined compression of the first segment and the second segment over the first layer, the second layer and the third layer of the elastomeric material causes the outer structure to elastically deform thereby maintaining a radially outward force to maintain the outer structure in a fixed relation to the housing.

In some embodiments, the predetermined compression of the first segment and the second segment over the first layer, the second layer and the third layer of the elastomeric material causes the outer structure to elastically deform thereby maintaining a radially outward force to maintain the outer structure in a fixed relation to the housing when the inner member is rotated up to 30 degrees relative to the outer structure about the central axis C.

In some embodiments, the hollow outer structure has an interior surface, and the inner member, the first shim structure, the second shim structure, and the interior surface have complementary shapes.

In some embodiments, the inner member comprises a spherical ball having a first mounting leg and a second mounting leg extending outwardly from the spherical ball in opposite directions.

In some embodiments, the first mounting leg has a first hole extending therethrough and the second mounting leg has a second hole extending therethrough.

The present invention includes a suspension linkage for a rail car suspension assembly that includes an elongate shaft which extends between a first end and a second end thereof along a longitudinal axis. A first head is formed proximate to the first end. The first head has a first bearing receiving bore extending through. The first head is perpendicular to the longitudinal axis. The first bearing receiving bore defines a first interior receiving surface. A second head is formed proximate to the second end. The second head has a second bearing receiving bore extending through the second head perpendicular to the longitudinal axis. The second bearing receiving bore defines a second interior receiving surface. A first elastomeric bearing and a second elastomeric bearing each have an inner member that has a spherical exterior surface which is symmetric about a central axis. Each of the elastomeric bearings includes a hollow annular outer structure that is axially split thereby forming a first outer segment and a second outer segment. The first outer segment and second outer segment form a substantially cylindrical exterior surface. The axial split is defined by opposing circumferentially faces on the first outer segment and the second outer segment. Each of the elastomeric bearings includes one or more shim structures that are formed around the inner member and are disposed at least partially inside the hollow annular outer structure. The shim structures have a radially outward facing surface and a radially inward facing surface. One or more layers of elastomeric material are disposed on each of the radially outward facing surface and the radially inward facing surface. The first elastomeric bearing is press fit into the first bearing receiving bore such that the cylindrical exterior surface of the outer structure is in fixed frictional engagement with the first interior receiving surface and the opposing circumferentially faces on the first outer segment and the second outer segment abut one another; and the second elastomeric bearing is press fit into the second bearing receiving bore such that the cylindrical exterior surface of the outer structure is in fixed frictional engagement with the second interior receiving surface and the opposing circumferentially faces on the first outer segment and the second outer segment abut one another.

In some embodiments, the shim structure(s) include a first shim structure and a second shim structure. A portion of the first shim structure has a first spherical contour. The first shim structure is axially split, formed around the inner member and disposed at least partially inside the hollow annular outer structure. A portion of the second shim structure has a second spherical contour. The second shim structure is axially split, formed around the first shim structure and disposed at least partially inside the hollow annular outer structure. One or more layers of an elastomeric material including a first layer of elastomeric material bonded to the inner member and the first shim structure and extending continuously along the first shim structure; a second layer of the elastomeric material bonded to the first shim structure and the second shim structure and extending continuously along the second shim structure; and a third layer of the elastomeric material bonded to the second shim structure and the hollow outer structure and extending continuously along the hollow outer structure.

In some embodiments, the first hole of the first elastomeric bearing and the first hole of the second elastomeric bearing are coaxial and the second hole of the first elastomeric bearing and the second hole of the second elastomeric bearing are coaxial.

In some embodiments, the first mounting leg of the first elastomeric bearing includes a first flat surface and the first mounting leg of the second elastomeric bearing includes a second flat surface. The second mounting leg of the first elastomeric bearing includes a third flat surface and the second mounting leg of the second elastomeric bearing comprises a fourth flat surface. The first flat surface and the second flat surface are parallel to each other; and the third flat surface and the fourth flat surface are parallel to each other.

In one embodiment of the suspension linkage, the predetermined compression of the first segment and the second segment of the outer structure over the first layer, the second layer and the third layer of the elastomeric material causes the outer structure to elastically deform.

In one embodiment of the suspension linkage, the fixed frictional engagement of the cylindrical exterior surface of the outer structure within the first interior receiving surface is maintained when the inner member is rotated up to 30 degrees relative to the outer structure, about the central axis C.

In one embodiment of the suspension linkage, the fixed frictional engagement of the cylindrical exterior surface of the outer structure within the second interior receiving surface is maintained when the inner member is rotated up to 30 degrees relative to the outer structure, about the central axis C.

There is also disclosed herein a jig assembly for installing the first elastomeric bearing and the second elastomeric bearing into the suspension linkage. The jig assembly includes a support system, a tapered die system, a press arrangement and an alignment rod. The support system has a first annular support and a second annular support. The first annular support has a first pocket and the second annular support has a second pocket. The first annular support is spaced apart from the second annular support. The first annular support has a first lateral opening and the second annular support has a second lateral opening that faces the first lateral opening. The tapered die system has a first tapered die and a second tapered die. The first tapered die is removably disposed on the first head, coaxial with the first annular support and the second tapered die is removably disposed on the second head, coaxial with the second annular support. The press arrangement has a first annular ram and a second annular ram. A first lateral slot extends radially through the first annular ram and an opening is on a first axial ram-end of the first annular ram. A second lateral slot extends radially through the second annular ram and an opening is on a second axial ram-end of the second annular ram. A first passage extends axially through the first annular ram and a second passage extends axially through the second annular ram. The first annular ram is removably disposed, coaxially on the first tapered die, such that the first lateral slot opens outwardly away from the first tapered die. The second annular ram is removably disposed, coaxially on the second tapered die, such that the second lateral slot opens outwardly away from the second tapered die. An alignment rod extends between a first rod-end and a second rod-end. A first portion of the rod, proximate to the first rod-end, is removably disposed in the first lateral slot and a second portion of the rod, proximate to the second rod-end, is removably disposed in the second lateral slot for alignment of the first elastomeric bearing and the second elastomeric bearing. For example, the first hole of the first elastomeric bearing is aligned with first hole of the second elastomeric bearing and the second hole of the first elastomeric bearing is aligned with the second hole of the second elastomeric bearing.

In one embodiment of the jig assembly, the support system removably retains the first head of the suspension linkage in the first pocket and removably retains the second head of the suspension linkage in the second pocket.

In one embodiment of the jig assembly, the first annular ram forces the first elastomeric bearing through the first tapered die, compressing the first segment of the outer structure of the first elastomeric bearing against the second segment of the outer structure of the first bearing and press fitting the first elastomeric bearing into the first bearing receiving bore. The second annular ram forces the outer structure of the second elastomeric bearing through the second tapered die, compressing the first segment of the outer structure of the second elastomeric bearing against the second segment of the outer structure of the second elastomeric bearing and press fitting the second bearing into the second elastomeric bearing receiving bore.

In one embodiment of the jig assembly, the first passage has a first anti-rotation arrangement therein to prevent rotation of the first mounting leg of the first elastomeric bearing when the mounting leg is disposed in the first anti-rotation arrangement. The second passage has an anti-rotation arrangement to prevent rotation of the first mounting leg of the second elastomeric bearing when the mounting leg is disposed in the second anti-rotation arrangement.

There is also disclosed herein, a method of installing the first elastomeric bearing and the second elastomeric bearing in a suspension linkage. The method includes providing the first bearing, a second bearing, a support system, a tapered die system, a press arrangement, an alignment rod and a suspension linkage. The support system has a first annular support with a first pocket and a second annular support with a second pocket. The first annular support is spaced apart from the second annular support. The first annular support has a first lateral opening and the second annular support has a second lateral opening that faces the first lateral opening. The tapered die system has a first tapered die and a second tapered die. The press arrangement has a first annular ram and a second annular ram. A first lateral slot extends radially through the first annular ram and an opening is on a first axial end of the annular ram. A second lateral slot extends radially through the second annular ram and opening is on a second axial end of the second annular ram. A first passage extends axially through the first annular ram and a second passage extends axially through the second annular ram. The alignment rod extends between a first rod end and a second rod end. The suspension linkage has an elongate shaft extending between a first end and a second end along a longitudinal axis L. A first head is formed proximate to the first end and a second head is formed proximate to the second end. The first head has a first bearing receiving bore, defining a first interior receiving surface, extending through the first head perpendicular to the longitudinal axis L. The second head has a second bearing receiving bore, defining a second interior receiving surface, extending through the second head perpendicular to the longitudinal axis L. The method includes positioning the first head in the first pocket of the first annular support and the second head in the second pocket of the second annular support. The method then includes positioning the first tapered die on the first head, coaxial with the first annular support and positioning the second tapered die on the second head, coaxial with the second annular support. The method then includes positioning the first bearings over the first tapered, positioning the second bearing over the second tapered die, aligning the first hole of the first of the bearing with the first hole of the second of the bearing and aligning the second hole of the first bearing with the second hole of the second of the bearing. The method then includes positioning the first annular ram over the first bearing, coaxially with the first tapered die, such that the first lateral slot opens outwardly away from the first tapered die and positioning the second annular ram over the second bearing, coaxially with the second tapered die, such that the second lateral slot opens outwardly away from the second tapered die. The method then includes positioning a first portion of the rod, proximate to the first rod end, in the first lateral slot and positioning a second portion of the rod, proximate to the second rod end, in the second lateral slot. The method includes applying a first force to the first annular ram to compress the first bearings in and through the first tapered die and out of the first tapered die into the first bearing receiving bore, such that the cylindrical exterior surface of the outer structure is in fixed frictional engagement with the first interior receiving surface of the first head and applying a second force to the second annular ram to compress the second bearing in and through the second tapered die and out of the second tapered die into the second bearing receiving bore, such that the cylindrical exterior surface of the outer structure is in fixed frictional engagement with the second interior receiving surface of the second head.

### Brief Description of the Drawings

FIG. 1 depicts a side view of a suspension linkage with two elastomeric bearings according to the present disclosure;
FIG. 2 depicts a top view of the suspension linkage with the two elastomeric bearings of FIG. 1;
FIG. 3 depicts an isometric view of the suspension linkage with the two elastomeric bearings of FIG. 1;
FIG. 4 depicts a side view of an elastomeric bearing according to the present disclosure;
FIG. 5 depicts a side cross-sectional view along line 5-5 of FIG. 4 of the elastomeric bearing of FIG. 4;
FIG. 6 depicts an isometric view of an elastomeric bearing in a relaxed state according to the present disclosure;
FIG. 7A depicts a top view of the elastomeric bearing of FIG. 6;
FIG. 7B is a cross-sectional view of section 7-7 of FIG. 6 for the portion highlighted by Detail 7B of FIG. 7A;;
FIG. 7C is a cross-sectional view of the portion of the elastomeric bearing illustrated in FIG. 7B but shown in a compressed state in the second head of the suspension linkage of FIG. 2;
FIG. 7D is a cross-sectional view of another embodiment of the elastomeric bearing of the present invention with the layers of elastomeric material being completely separated from one another;
FIG. 8 depicts a partial side cross-sectional view of a jig assembly according to the present disclosure with a side view of an elastomeric bearing according to the present disclosure depicted therein;
FIG. 9 depicts a side cross-sectional view along line 9-9 of FIG. 9 of the second annular ram and the second tapered die with a side view of the elastomeric bearing depicted therein;
FIG. 10 depicts a side cross-sectional view of a jig assembly, a suspension linkage, and two elastomeric bearings according to the present disclosure;
FIG. 11 depicts a side cross-sectional view of the jig assembly, the suspension linkage, and the two elastomeric bearings of FIG. 10 with one of the elastomeric bearings installed in the suspension linkage;
FIG. 12 depicts an isometric view of a rail car suspension assembly and two suspension linkages according to the present disclosure;
FIG. 13 depicts an alternate isometric view of the rail car suspension assembly and two suspension linkages of FIG. 12;
FIG. 14 is a partial view of the rail car suspension assembly and two suspension linkages of FIG. 13;
FIG. 15A is an isometric view of an annular ram according to the present disclosure;
FIG. 15B is an alternate isometric view of the annular ram of FIG. 15A;
FIG. 15C is another alternate isometric view of the annular ram of FIG. 15A
FIG. 16 is a graph showing a plot of compression force on the outer structure versus decreasing gap size.

### Detailed Description

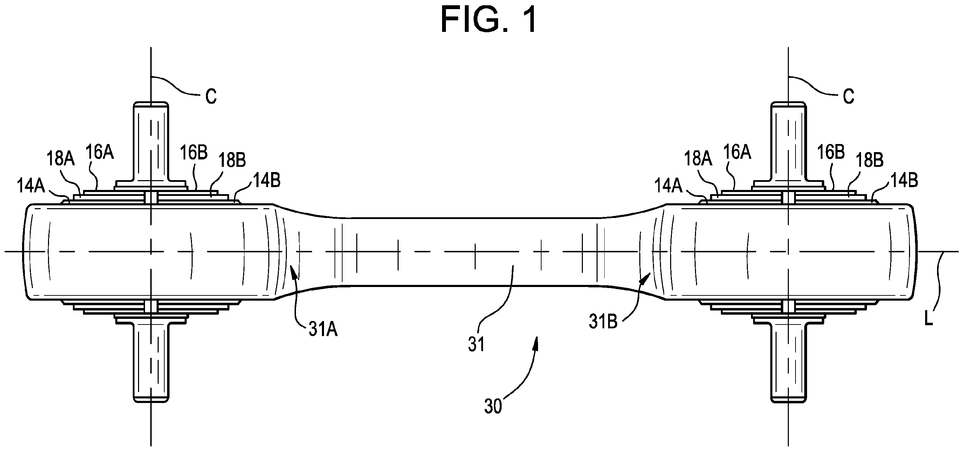

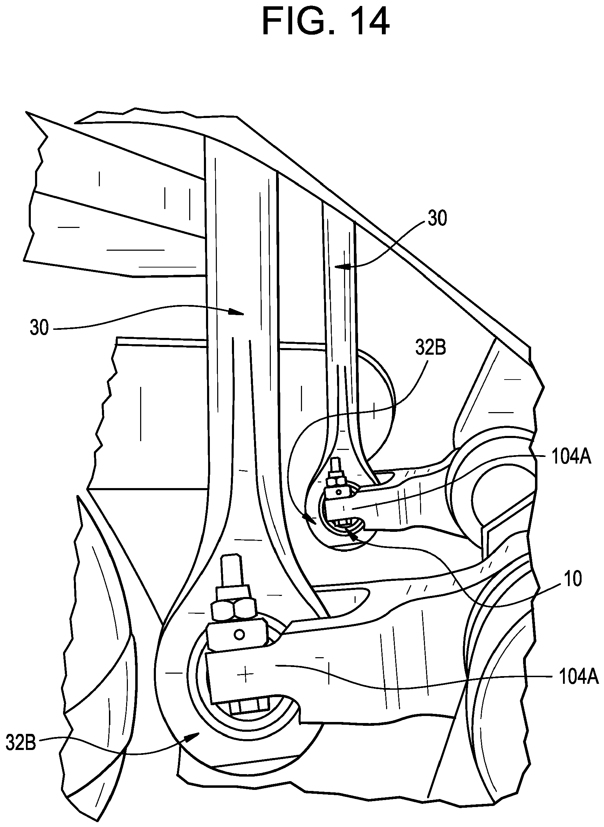

As shown in FIGS. 1-14, an elastomeric bearing according to the present disclosure is generally designated by numeral 10.

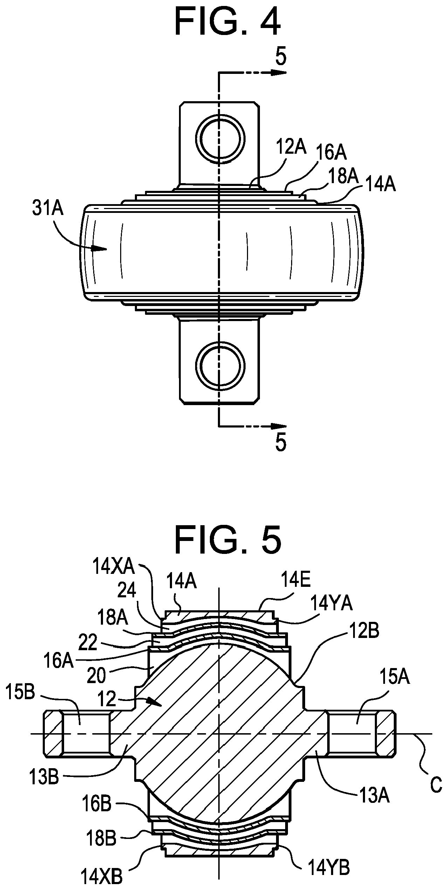

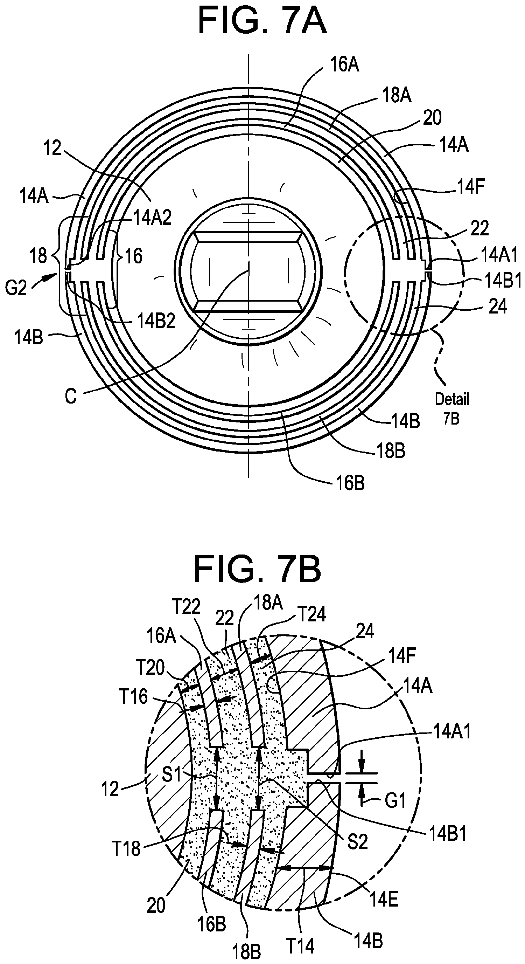

Referring to FIGS. 4-7B, the elastomeric bearing 10 has an inner member 12 and a hollow outer structure 14 centered on a central axis C. The hollow outer structure 14 is axially split, forming a first segment 14A and a second segment 14B. As shown in FIG. 5, the first segment extends axially from a first axial end 14XA to a second axial end 14YA thereof. The second segment 14B extends axially from a first axial end 14XB to a second axial end 14YB thereof. As shown in FIG. 7A, the axial split of the outer structure 14 is defined by (a) a first circumferentially facing surface 14A1 on the first segment 14A that extends from the first axial end 14XA to the second axial end 14YA thereof; (b) a second circumferentially facing surface 14A2 on the first segment 14A that extends from the first axial end 14XA to the second axial end 14YA thereof; (c) a first circumferentially facing surface 14B1 on the second segment 14B that extends from the first axial end 14XB to the second axial end 14YB thereof; and (d) a second circumferentially facing surface 14B2 on the second segment 14B that extends from the first axial end 14XB to the second axial end 14YB thereof. The first segment 14A and the second segment 14B form a substantially cylindrical exterior surface 14E that has an outer structure outside diameter. A first shim structure 16 is formed around the inner member 12 and is disposed at least partially inside the hollow outer structure 14. Referring to FIG. 7B, the first shim structure 16 is axially split, forming a first shim segment 16A and a second shim segment 16B that are separated from one another by two first spacings S1. In one embodiment, the two first spacings S1 each having a magnitude of about 5 mm to about 10 mm. A second shim structure 18 is formed around the first shim structure 16 and is disposed at least partially inside the hollow outer structure 14. The second shim structure 18 is axially split, forming a third shim segment 18A and a fourth shim segment 18B that are separated from one another by two second spacings S2. In one embodiment, the two second spacings S2 each having a magnitude of about 5 to about 10 mm.

As shown in FIG. 7B, the outer structure 14 has a radial thickness T14, the first shim structure 16 has a radial thickness T16 and the second shim structure 18 has a radial thickness T18. In one embodiment, the radial thicknesses T14, T16 and T18 are of equal magnitudes. In some embodiments, the radial thicknesses T14, T16 and T18 have different magnitudes, including but not limited to the radial thickness T14 being greater than the radial thicknesses T16 and T18; the radial thickness T16 being greater than the radial thicknesses T14 and T18; and the radial thickness T18 being greater than the radial thicknesses T14 and T16.

The inner member 12, the outer structure 14 and the first and second shim structures 16,18 are made from metallic materials such as, but not limited to, carbon steel such as AISI 1035 or AISI 1045 (equivalent to C35, C45 or C45E) and precipitation hardening steels, such as 17-4PH, PH13-8Mo, and 15-5PH. In one embodiment, all of the inner member 12, the outer structure 14 and the first and second shim structures 16,18 are made from the same material. In another embodiment, the inner member 12, the outer structure 14 and the first and second shim structures 16,18 are made from different materials.

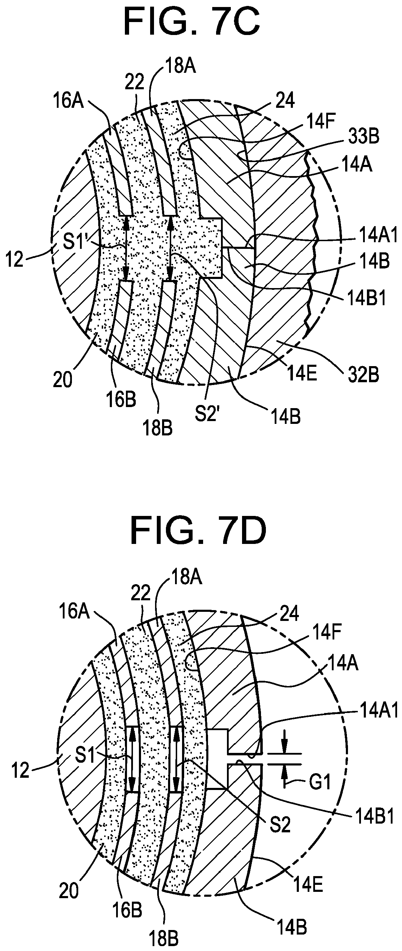

Referring to FIG. 7B, a first layer 20 of elastomeric material (e.g., a vulcanizable elastomeric compound) is bonded (e.g., via vulcanization or via an adhesive such as epoxy or phenolic resin) to aspherical exterior surface of the inner member 12 and the first shim structure 16. A second layer 22 of elastomeric material is bonded (i.e., e.g., via vulcanization or via an adhesive such as epoxy or phenolic resin) to the first shim structure 16 and the second shim structure 18. A third layer 24 of elastomeric material is bonded (i.e., e.g., via vulcanization or via an adhesive such as epoxy or phenolic resin) to the second shim structure 18 and the hollow outer structure 14. It is contemplated that the first layer 20 of the elastomeric material, the second layer 22 of the elastomeric material, and the third layer 24 of the elastomeric material are all the same material and are interconnected to one another via a single bonding process. However, different elastomeric materials can be used for the first layer 20, the second layer 22, and the third layer 24, e.g., one elastomeric material can be used for the first layer 20 and a different elastomeric material can be used for the second layer 22 and the third layer 24. Other combinations of elastomeric materials are within the scope of this invention. While the first layer 20 of the elastomeric material, the second layer 22 of the elastomeric material, and the third layer 24 of the elastomeric material are all the same material and are shown and described as being interconnected to one another via a single bonding process, the present invention is not limited in this regard as other configurations are within the scope of the present invention including but not limited to the first layer 20 of the elastomeric material, the second layer 22 of the elastomeric material, and the third layer 24 of the elastomeric material being separate from one another as illustrated, for example, in FIG. 7D.

As shown in FIG. 7B the first layer 20 of the elastomeric material has a radial thickness T20, the second layer 22 of the elastomeric material has a radial thickness T22, and the third layer 24 of the elastomeric material has a radial thickness T24. In one embodiment, the radial thicknesses T20, T22 and T24 are of equal magnitudes. In some embodiments, the radial thicknesses T20, T22 and T24 have different magnitudes, including but not limited to the radial thickness T20 being greater than the radial thicknesses T22 and T24; the radial thickness T22 being greater than the radial thicknesses T20 and T24; and the radial thickness T24 being greater than the radial thicknesses T20 and T24.

In one embodiment, the surface of the first shim structure 16 and the surface of the second shim structure 18 are each treated or roughened (e.g., sand blasted) and one or more layers of primer is applied to the first shim structure 16 and the second shim structure 18 to ensure optimal bonding with the elastomeric material during vulcanization. The elastomeric material is injected under pressure between the first shim structure 16 and the second shim structure 18 and heated to obtain the vulcanization. Referring to FIGS. 7A and 7B, the hollow outer structure 14 has an interior surface 14F that is complementary in shape to the inner member 12, the first shim structure 16, and the second shim structure 18.

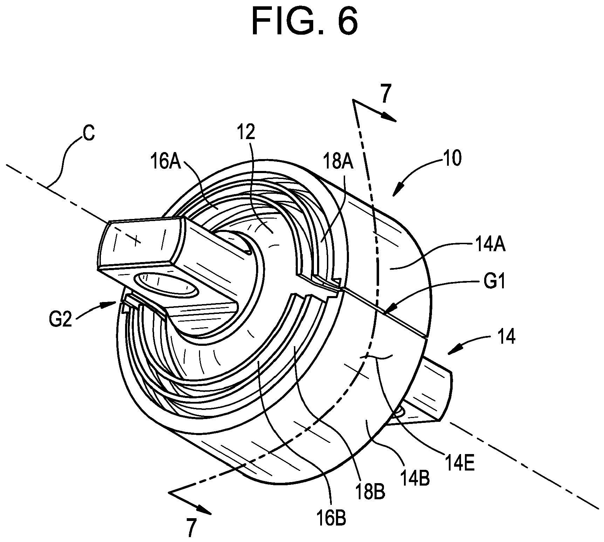

In a relaxed state, as depicted in FIGS. 6, 7A and 7B, before the hollow outer structure 14 is inserted into a bore 34A, 34B formed in a head 32A, 32B, respectively of the suspension linkage 30 (as depicted in FIGS. 1-3), the first segment 14A and the second segment 14B are separated by a first gap G1 at one end and a second gap G2 at a second end opposite the first end (as depicted in FIG. 6). The first gap G1 is measured between the first circumferentially facing surface14A1 of the first segment 14A and the first circumferentially facing surface 14B1 of the second segment 14B. The second gap G2 is measured between the second circumferentially facing surface 14A2 of the first segment 14A and the second circumferentially facing surface 14B2 of the second segment 14B. In the relaxed state, the first gap G1 and the second gap G2 are each approximately 1 mm. The magnitude of each of the first gap G1 and the second gap G2 allows the first segment 14A and the second segment 14B to engage each other (i.e., the first circumferentially facing surface 14A1 of the first segment 14A engages the first circumferentially facing surface 14B1 of the second segment 14B; and the second circumferentially facing surface 14A2 of the first segment 14A engages the second circumferentially facing surface 14B2 of the second segment 14B).

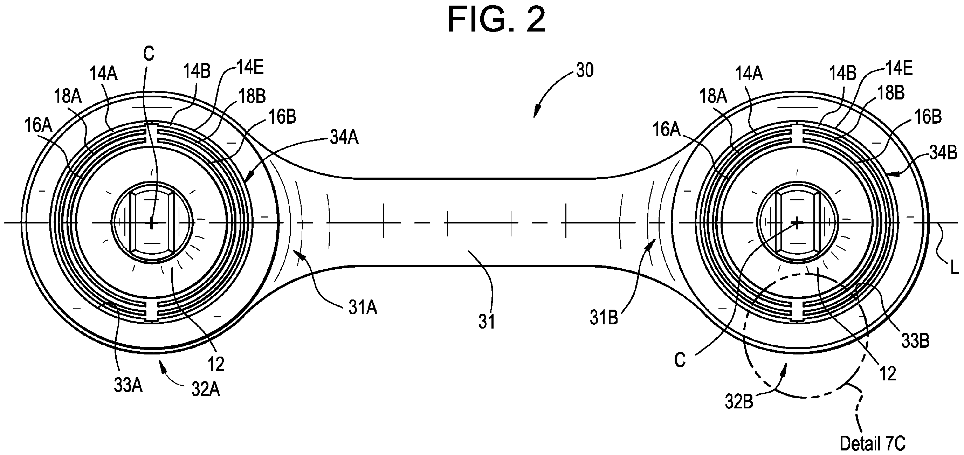

As shown in FIG. 7C in a compressed state, in which the cylindrical exterior surface 14E of the outer structure 14 is press fit into a bore (e.g., first bearing receiving bore 34A of the first head 32A and the second bearing receiving bore 34B of the second head 32B of FIG. 2) of a housing (e.g., the first head 32a and the second head 32B of FIG. 2) to maintain the outer structure 14 in a fixed position relative to the housing. The spacing S1 in the relaxed state (see FIG. 7B) between the first shim segment 16A and the second shim segment 16B is reduced in magnitude when in a compressed state (FIG. 7C) to a spacing S1' which is less than S1. The spacing S2 in the relaxed state (see FIG. 7B) between the third shim segment 18A and the fourth shim segment 18B is reduced in magnitude when in a compressed state (FIG. 7C) to a spacing S2' which is less than S2. The magnitude of spacings S1' and S2' are greater than zero. The radial thickness of each of the first layer 20, the second layer 22, and the third layer 24 of the elastomeric material is between 2 mm and 3 mm in the relaxed stated. In the compressed state, the first layer 20, the second layer 22 and the third layer 24 of the elastomeric material compress a predetermined amount. When assembled, each of the first layer 20, the second layer 22 and the third layer 24 of the elastomeric material receives the same amount of stress to ensure an equal lifetime of each layer with beneficial fatigue properties to prevent localized failure of the elastomeric bearing 10 due to the failure of any single layer of elastomeric material. In one embodiment, the predetermined amount of compression is a maximum of 15% of the radial thickness of the layer of the elastomeric material in the relaxed state. The predetermined amount of compression of the first layer 20, the second layer 22 and the third layer 24 of the elastomeric material causes the outer structure 14 to elastically deform, as described further herein. The elastic deformation of the outer structure 14 exerts a radially outwardly directed force to maintain the outer structure 14 in a fixed position relative to the housing. In the embodiment depicted in FIGS. 1-3, the outer structure 14 is fixed relative to the housing, but allows the inner member 12 to be rotated up to 30 degrees relative to the outer structure 14 about the central axis C.

Referring to FIG. 5, the inner member 12 is a spherical ball 12B with a first mounting leg 13A and a second mounting leg 13B extending outwardly from the spherical ball 12B in opposite directions, along the central axis C. A first hole 15A extends through the first mounting leg 13A and a second hole 15B extends through the second mounting leg 13B. The first hole 15A penetrates the first mounting leg 13A and the second hole 15B penetrates the second mounting leg 13B perpendicular to the central axis C.

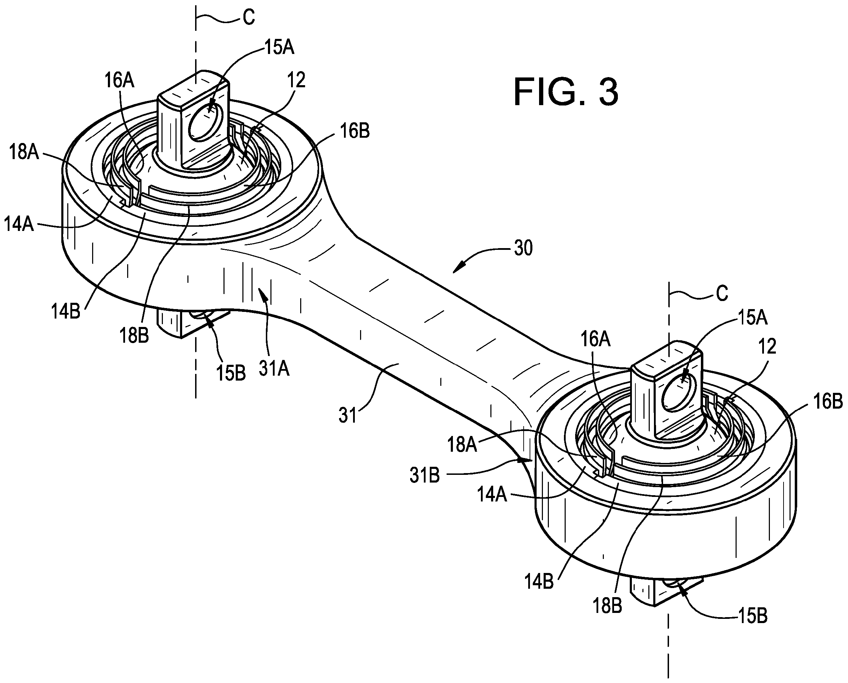

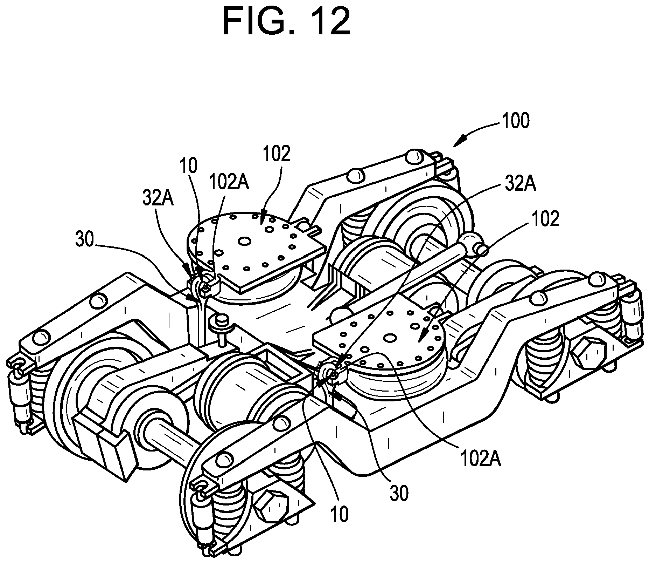

FIGS. 1-3, 10 and 11 depict a suspension linkage 30 for a rail car suspension assembly 100 (depicted in FIGS. 12-14) that incorporates two elastomeric bearings 10. Referring to FIGS. 1-3, the suspension linkage 30 is an elongate shaft 31 extending between a first end 31A and a second end 31B along a longitudinal axis L. Referring to FIG. 2, the suspension linkage 30 has a first head 32A formed proximate to the first end 31A and a second head 32B formed proximate to the second end 31B. The first head 32A has a first bearing receiving bore 34A defined by a first interior receiving surface 33A, extending through the first head 32A, perpendicular to the longitudinal axis L and centered on the central axis C. The second head 32B has a second bearing receiving bore 34B defined by a second interior receiving surface 33B, extending through the second head 32B, perpendicular to the longitudinal axis L and centered on the central axis C. Both of the first interior receiving surface 33A and the second interior receiving surface 33B are cylindrical and have a receiving surface inside diameter. A first bearing 10 is press fit into the first bearing receiving bore 34A such that the cylindrical exterior surface 14E of the outer structure 14 is in fixed frictional engagement with the first interior receiving surface 33A of the first head 32A. A second bearing 10 is press fit into the second bearing receiving bore 34B such that the cylindrical exterior surface 14E of the outer structure 14 is in fixed frictional engagement with the second interior receiving surface 33B of the second head 32B. The receiving surface inside diameter of each of the first receiving surface 33A and the second receiving surface 33B are slightly less in magnitude than the outer structure outside diameter of the exterior surface 14E of the outer structure 14 to establish the press fit (i.e., interference fit). Referring to FIG. 3, the first hole 15A and the second hole 15B of each bearing 10 are parallel to one another. The first hole 15A of the first of the bearings 10 is coaxial with the first hole 15A of the second of the bearings 10 and the second hole 15B of the first of the bearings 10 is coaxial with the second hole 15B of the second of the bearings.

The predetermined compression of the first segment 14A and the second segment 14B over the first layer 20, the second layer 22 and the third layer 24 of the elastomeric material in each bearing 10 within the suspension linkage 30 causes the outer structure 14 to elastically deform, as described further herein. The fixed frictional engagement of the cylindrical exterior surface 14E of the outer structure 14 within the first interior receiving surface 33A of the first head 32A of the suspension linkage 30 is maintained when the inner member 12 is rotated up to 30 degrees relative to the outer structure 14, about the central axis C. The fixed frictional engagement of the cylindrical exterior surface 14E of the outer structure 14 within the second interior receiving surface 33B of the second head 32B of the suspension linkage 30 is maintained when the inner member 12 is rotated up to 30 degrees relative to the outer structure 14, about the central axis C.

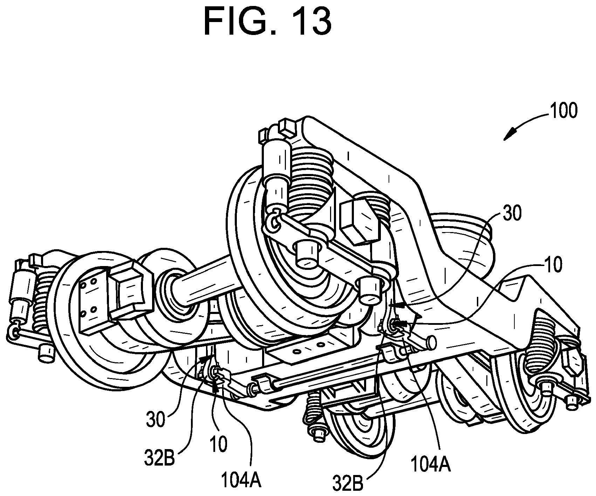

As shown in FIGS. 12-14, in one embodiment, the first head 32A is positioned in a clevis 102A, which extends out from a support plate 102 in the rail car suspension assembly 100. The support plate 102 is pivotally coupled to the rail car suspension assembly 100. As shown in FIG. 13, the suspension linkage 30 extends from the first end 31A positioned in the clevis 102A to the second end 31B positioned in a second clevis 104A located on the underside of the rail car suspension assembly 100.

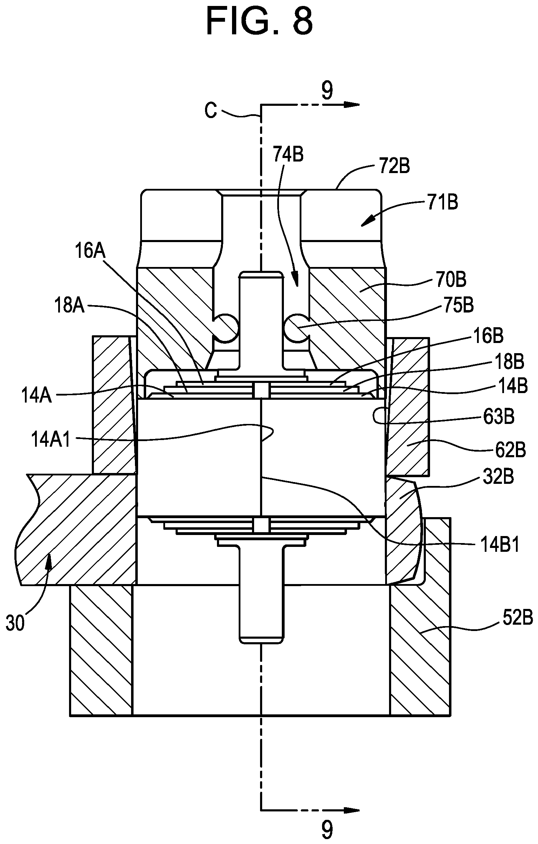

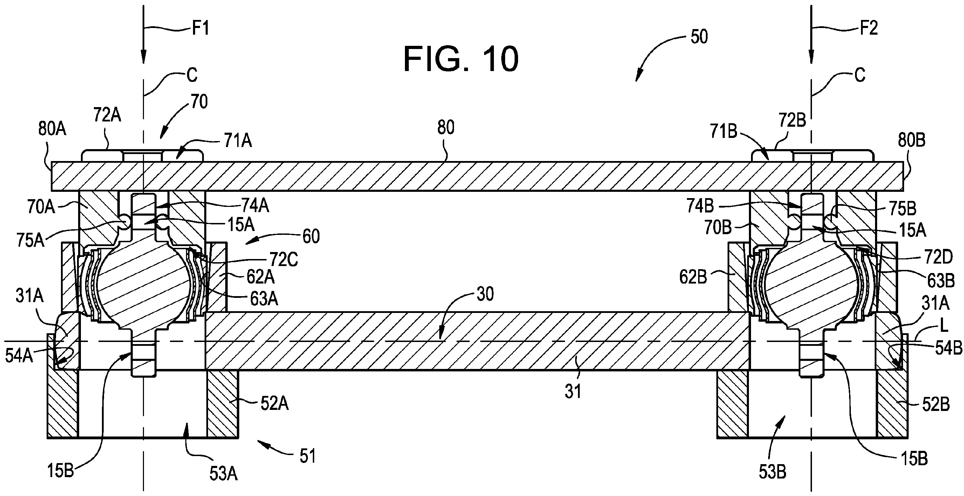

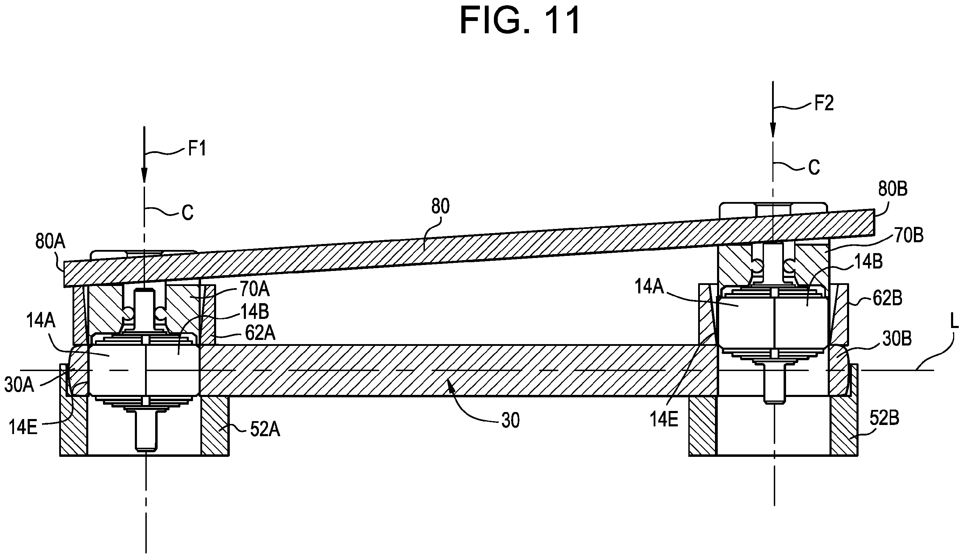

Referring to FIGS. 8-11, a jig assembly 50 is used to install a bearing 10 into the first bearing receiving bore 34A and the second bearing receiving bore 34B of the suspension linkage 30. Referring to FIG. 10, the jig assembly 50 has a support system 51, a tapered die system 60, a press arrangement 70 and an alignment rod 80. The support system 51 has a first annular support 52A and a second annular support 52B spaced apart from one another (as depicted in FIGS. 10 and 11). The first annular support 52A has a first pocket 53A and a first lateral opening 54A. The second annular support 52B has a second pocket 53B and a second lateral opening 54B. The second lateral opening 54B faces the first lateral opening 54A. The support system 50 removably retains the first head 32A of the suspension linkage 30 in the first pocket 53A and removably retains the second head 32B of the suspension linkage 30 in the second pocket 53B. The first lateral opening 54A and the second lateral opening 54B provide longitudinally opposed stops for opposite ends of the suspension linkage 30.

Referring to FIG. 10, the tapered die system 60 has a first tapered die 62A and a second tapered die 62B. The first tapered die 62A is removably disposed on the first head 32A of the suspension linkage 30, above the first annular support 52A. A first interior surface 63A extends through the first tapered die 62A, coaxial with the first pocket 53A of the first annular support 52A. The second tapered die 62B is removably disposed on the second head 32B of the suspension linkage 30, above the second annular support 52B. A second interior surface 63B extends through the second tapered die 62B, coaxial with the second pocket 53B of the second annular support 52B.

The press arrangement 70 has a first annular ram 70A and a second annular ram 70B. A first lateral slot 71A extends radially through the first annular ram 70A and opens towards a first axial end 72A of the first annular ram 70A. A second lateral slot 71B extends radially through the second annular ram 70B and opens towards a second axial end 72B of the second annular ram 70B. In the embodiment depicted in FIGS. 8-11, the first lateral slot 71A and the second lateral slot 71B are arranged parallel to the longitudinal axis L. A first passage 74A extends axially through the first annular ram 70A from the first lateral slot 71A to a third axial end 72C of the first annular ram 70A. A second passage 74B extends axially through the second annular ram 70B from the second lateral slot 71B to a fourth axial end 72D of the second annular ram 70B. The first annular ram 70A is removably disposed on a bearing 10 retained within the first tapered die 62A with the first passage 74A of the first annular ram 70A coaxial with the first tapered die 62A such that the first lateral slot 71A opens outwardly away from the first tapered die 62A. The second annular ram 70B is removably disposed on the second tapered die 62B with the second passage 74B of the second annular ram 70B coaxial with the second tapered die 62B such that the second lateral slot 71B opens outwardly away from the second tapered die 62B.

The alignment rod 80 extends between a first rod end 80A and a second rod end 80B. A first portion of the rod 80, proximate to the first rod end 80A, is removably disposed in the first lateral slot 71A of the first annular ram 70A. A second portion of the rod 80, proximate to the second rod end 80B, is removably disposed in the second lateral slot 71B of the second annular ram 70B. The first lateral slot 71A and the second lateral slot 71B receive the alignment rod 80 to align the bearings 10 (specifically to align the first holes 15A of each bearing 10 with each other and to align the second holes 15B of each bearing 10 with each other).

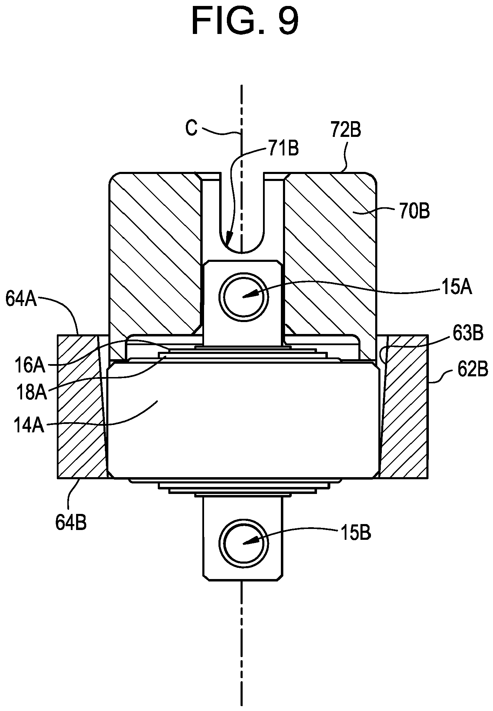

Prior to installation in the suspension linkage 30, a bearing 10 is retained within the first tapered die 62A and a bearing 10 is retained within the second tapered die 62B. The bearing 10 retained within the second tapered die 62B is depicted, for exemplary purposes, in FIG. 9. The second interior surface 63B of the second tapered die 62B is angled, such that the diameter of the second interior surface 63B proximate to a fifth axial end 64A is large enough to accommodate the first segment 14A and the second segment 14B of the hollow outer structure 14 in the relaxed state. The diameter of the second interior surface 63B proximate to a sixth axial end 64B is small enough to accommodate the first segment 14A and the second segment 14B of the hollow outer structure 14 in the compressed state. The angle of the second interior surface 63B, relative to the central axis C, ensures that the bearing 10 is retained within the second tapered die 62B prior to insertion in the second interior receiving surface 33B of the second head 32B. In order to insert a bearing 10 in each of the first head 32A and the second head 32B of the suspension linkage 30, the first annular ram 70A forces a first of the bearings 10 through the first tapered die 62A, compressing the first segment 14A of the outer structure 14 of the first of the bearings 10 against the second segment 14B of the outer structure of the first of the bearings 10 and press fitting the first of the bearings 10 into the first bearing receiving bore 34A. The second annular ram 70B forces the outer structure 14 of a second of the bearings 10 through the second tapered die 62B (as depicted in FIG. 8), compressing the first segment 14A of the outer structure of the second of the bearings 10 against the second segment 14B of the outer structure of the second of the bearings 10 and press fitting the second of the bearings 10 into the second bearing receiving bore 34B. The structure and functionality of the first tapered die 62A is the same as that of the second tapered die 62B as described above with reference to FIGS. 8 and 9. In the embodiment depicted in FIGS. 8-11, the first interior surface 63A and the second interior surface 63B are each angled relative to the central axes C between 1° and 5° to create a frustoconical surface.

As shown in FIG. 7C, the first segment 14A and the second segment 14B of the outer structure 14 are elastically deformed (i.e., press fit or interference fit) into the second bearing receiving bore 34B such that the cylindrical exterior surface 14E of the outer structure 14 is in fixed frictional engagement with the second interior receiving surface 33B of second head 32B of the suspension linkage 30 (see FIG. 3). The first head 32A of the suspension linkage 30 is configured similar to the second head 32B. The elastic deformation of the first segment 14A and the second segment 14B of the outer structure 14 is slight compared to elastic deformation (i.e., compression) of the first layer 20 of elastomeric material, the second layer 22 of elastomeric material and third layer 24 of elastomeric material. Thus the majority of the elastic deformation is in the first layer 20 of elastomeric material, the second layer 22 of elastomeric material and third layer 24 of elastomeric material.

The compression of the first segment 14A and the second segment 14B of the outer structure 14 causes the elastic deformation (i.e., compression) of the first layer 20 of elastomeric material, the second layer 22 of elastomeric material and third layer 24 of elastomeric material and has utility in keeping the outer structure 14 in fixed relation to the second interior receiving surface 33B of second head 32B of the suspension linkage 30 (see FIG. 3) during reversing loads and motions.

In addition, the compression of the first segment 14A and the second segment 14B of the outer structure 14 causes the elastic deformation (i.e., compression) of the first layer 20 of elastomeric material, the second layer 22 of elastomeric material and third layer 24 of elastomeric material and has utility in imparting an initial compressive stress in the first layer 20 of elastomeric material, the second layer 22 of elastomeric material and third layer 24 of elastomeric material which results in better stiffness behavior and also helps in fatigue resistance of the elastomeric bearing 10 which is configured to withstand more than ten million cycles of reverse loading, oscillation and motion in two rotational axes.

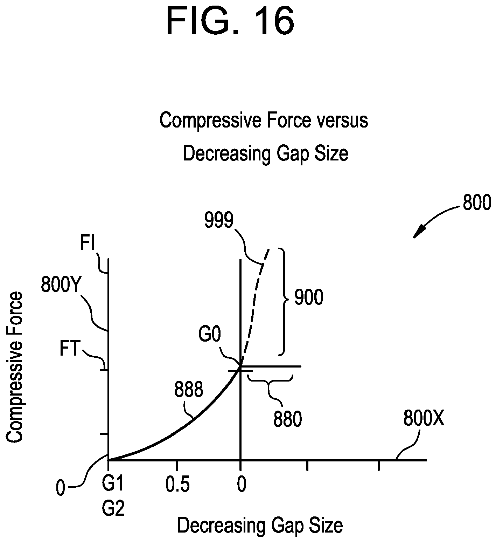

The gap G1 has utility in limiting the compressive force on the first layer 20 of elastomeric material, the second layer 22 of elastomeric material and third layer 24 of elastomeric material to a predetermined maximum to prevent damage thereto. As shown in FIG. 16, a graph 800 has an X-axis 800X which represents decreasing magnitude of the first gap G1 and the second gap G2; and a Y-axis which represents compressive force. The compressive force shown is either of the force applied to the outer structure 14 and the force applied to the first layer 20 of elastomeric material, the second layer 22 of elastomeric material and third layer 24 of elastomeric material through the outer structure 14. A section 888 of the graph 800 shows that as compressive force increases from zero to a threshold force FT the first layer 20 of elastomeric material, the second layer 22 of elastomeric material and third layer 24 of elastomeric material are all being compressed. As the as compressive force increases from zero to a threshold force FT the first segment 14A and the second segment 14B of the outer section 14 are moved towards each other but are not elastically deformed. The graph 800 illustrates an inflection point GO which illustrates that when the first gap G1 and the second gap G2 reach a magnitude of zero and as the compressive force is increased above the threshold force FT compression of the first layer 20 of elastomeric material, the second layer 22 of elastomeric material and third layer 24 of elastomeric material ceases as shown by the flat section 880 of the graph. As shown in section 999 of the graph, the compressive force is increased above the threshold force FT towards an interference fit force FI, the outer section 14 begins to elastically deform in compression as indicated by the dashed line section 900 of the graph showing a steep slope, while the first layer 20 of elastomeric material, the second layer 22 of elastomeric material and third layer 24 of elastomeric material are no longer compressed and are therefore protected from excessive compression.

The inventors have surprisingly discovered that establishing the magnitude of the first gap G1 and the second gap G2 at a predetermined magnitude to accomplish the optimum compression of the first layer 20 of elastomeric material, the second layer 22 of elastomeric material and third layer 24 of elastomeric material and limiting that compression by having the first gap G1 and the second gap G2 close to zero by having the first segment 14A and the second segment 14B engage each other (i.e., the first circumferentially facing surface 14A1 of the first segment 14A engages the first circumferentially facing surface 14B1 of the second segment 14B; and the second circumferentially facing surface 14A2 of the first segment 14A engages the second circumferentially facing surface 14B2 of the second segment 14B) also impart an optimum configuration for press fitting the elastomeric bearing 10 in the first bearing receiving bore 34A and the second bearing receiving bore 34B to prevent the elastomeric bearing 10 from moving under reversing loading and motion. Thus, the configuration of the first gap G1 and the second gap G2 and the compression of the outer structure 14 to close the gap to zero solves the problem of excessive compression of the first layer 20 of elastomeric material, the second layer 22 of elastomeric material and third layer 24 of elastomeric material, problems associated with slippage and movement of bearing in a housing and the problems associated with having housings with various bore diameters that make it difficult to achieve a proper press fit. For example, the inventors have surprisingly discovered that if the first gap G1 and the second gap G2 were not closed to zero, that the resultant bearings were sensitive to housing diameter, susceptible to excessive compression of the elastomeric material and negatively impacted fatigue properties of the bearing due to inadequate or excessive compression of the elastomeric material and undesirable slippage of the bearing in the housing.

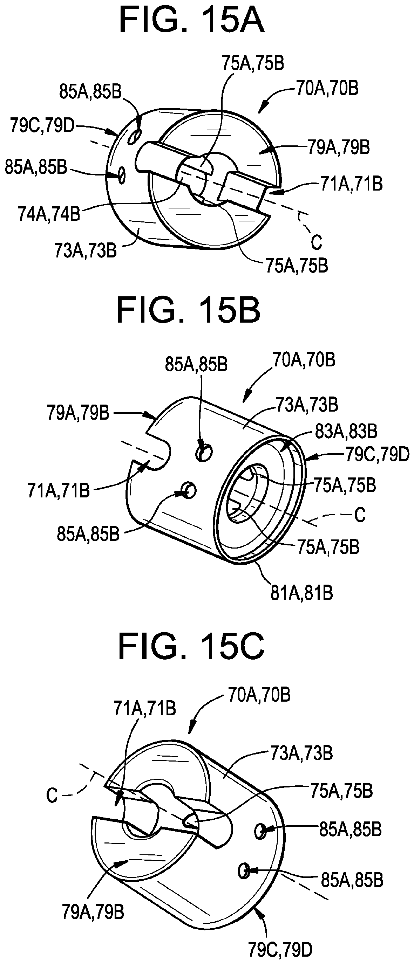

Referring to FIGS. 15A-15C, the first annular ram 70A forms a cylindrical member surrounding the first passage 74A extending between a first end 79A and a second end 79C. The second end 79C of the first annular ram 70A is defined at an outer surface 73A by a first ram abutment surface 81A. A first recess 83A extends from the first ram abutment surface 81A towards the first end 79A of the first annular ram 70A and in the radially inward direction (towards the central axis C) to the first passage 74A. In the embodiment depicted in FIGS. 15A-15C, two first ram bores 85A penetrate the outer surface 73A the first annular ram 70A between the first end 79A and the second end 79C. Each of the first ram bores 85A extends from the outer surface 73A, at least partially through the first passage 74A, to the outer surface 73A. The first ram bores 85A are spaced apart and parallel to one another and are each aligned generally parallel to the longitudinal axis L. In the embodiment depicted in FIGS. 15A-15C, the first lateral slot 71A is centered between and arranged generally parallel to the two first ram bores 85A. The locations of the first ram bores 85A are configured such that one first ram bore 85A can be arranged to one side of the first mounting leg 13A and the other first ram bore 85A can be arranged to the other side of the first mounting leg 13A of an inner member 12. Each of the first ram bores 85A receives a first anti-rotation member 75A (e.g., a pin) that projects into the first passage 74A of the first annular ram 70A. The first anti-rotation members 75A accommodate the first mounting leg 13A and engage opposing sides of the first mounting leg 13A to prevent rotation of the first mounting leg 13A of a first of the bearings 10 about the central axis C.

Referring to FIGS. 15A-15C, the second annular ram 70B forms a cylindrical member surrounding the second passage 74B extending between a first end 79B and a second end 79D. The second end 79D of the second annular ram 70B is defined at an outer surface 73B by a second ram abutment surface 81B. A second recess 83B extends from the second ram abutment surface 81B towards the first end 79B of the second annular ram 70B and in the radially inward direction (towards the central axis C) to the second passage 74B. In the embodiment depicted in FIGS. 15A-15C, two second ram bores 85B penetrate the outer surface 73B the second annular ram 70B between the first end 79B and the second end 79D. Each of the second ram bores 85B extends from the outer surface 73B, at least partially through the second passage 74B, to the outer surface 73B. The second ram bores 85B are spaced apart and parallel to one another and are each aligned generally parallel to the longitudinal axis L. In the embodiment depicted in FIGS. 15A-15C, the second lateral slot 71B is centered between and arranged generally parallel to the two second ram bores 85B. The locations of the second ram bores 85B are configured such that one second ram bore 85B can be arranged to one side of the first mounting leg 13A and the other second ram bore 85B can be arranged to the other side of the first mounting leg 13A of an inner member 12. Each of the second ram bores 85B receives a second anti-rotation member 75B (e.g., a pin) that projects into the second passage 74B of the second annular ram 70A. The second anti-rotation members 75B accommodate the first mounting leg 13A and engage opposing sides of the first mounting leg 13A to prevent rotation of the first mounting leg 13A of a second of the bearings 10 about the central axis C.

The first recess 83A and the second recess 83B provide axial space for accommodating an edge of the first shim structure 16 and the second shim structure 18 that project beyond the outer structure 14. The first ram abutment surface 81A and the second ram abutment surface 81B axially engage the outer structure 14 to translate a force exerted by the user from the first annular ram 70A or the second annular ram 70B to each of the bearings 10, as discussed in detail below. In the embodiment depicted in FIGS. 15A-15C, each of the first anti-rotation members 75A and the second anti-rotation members 75B are cylindrical pins, but other types of retainers do not depart from the present disclosure.

A method of installing the bearings 10 in the suspension linkage 30 using the jig assembly 50 is also disclosed herein. The method of installing the bearings 10 begins by providing a first of the bearings 10, a second of the bearings 10, a support system 51, a tapered die system 60, a press arrangement 70, an alignment rod 80 and a suspension linkage 30 of a rail car suspension system 100 as disclosed herein. A user positions the first head 32A of the suspension linkage 30 in the first pocket 53A of the first annular support 52A and positions the second head 32B of the suspension linkage 30 in the second pocket 53B of the second annular support 52B. The user positions the first tapered die 62A on the first head 32A, coaxial with the first annular support 52A and the second tapered die 62B on the second head 32B, coaxial with the second annular support 52B. The user positions the first of the bearings 10 over the first tapered die 62A and the second of the bearings 10 over the second tapered die 62B, aligning the first of the bearings 10 with the second of the bearings 10. The user positions the first annular ram 70A over the first of the bearings 10 coaxially with the first tapered die 62A such that the first lateral slot 71A opens outwardly away from the first tapered die 62A and positions the second annular ram 70B over the second of the bearings 10 coaxially with the second tapered die 62B such that the second lateral slot 71B opens outwardly away from the second tapered die 62B. The method then includes inserting a first anti-rotation member 75A in each of the two first ram bores 85A such that each first anti-rotation member 75A engages the first mounting leg 13A of one of the bearings 10 and inserting a second anti-rotation member 75B in each of the two second ram bores 85B such that each second anti-rotation member 75B engages the first mounting leg 13A of the second of the bearings 10. The method of installation involves placing a first portion of the rod 80 proximate the first rod end 80A in the first lateral slot 71A and placing a second portion of the rod 80 proximate the second rod end 80B in the second lateral slot 71B. The user applies a first force F1 to the first annular ram 70A, along the central axis C towards the first head 32A, compressing the first of the bearings 10 in and through the first tapered die 62A and out of the first tapered die 62A into the first bearing receiving bore 34A, such that the cylindrical exterior surface 14E of the outer structure 14 is in fixed frictional engagement with the first interior receiving surface 33A of the first head 32A (as depicted in FIG. 11). The user applies a second force F2 to the second annular ram 70A, along the central axis C towards the second head 32B, compressing the second of the bearings 10 in and through the second tapered die 62B and out of the second tapered die 62B into the second bearing receiving bore 34B such that the cylindrical exterior surface 14E of the outer structure 14 is in fixed frictional engagement with the second interior receiving surface 33B of the second head 32B. In the embodiment depicted in FIGS. 8-11 the alignment rod 80 is free to move out of the first lateral slot 71A and the second lateral slot 71B in a direction away from the press arrangement 70 and the first rod end 80A and the second rod end 80B are free to translate in a generally longitudinal direction (parallel to longitudinal axis L).

The following clauses that are listed as items represent embodiments of the present invention.
Item 1 - An elastomeric bearing 10 comprising: an inner member 12 having a spherical exterior surface and being symmetric about a central axis C; a hollow annular outer structure 14 being axially split thereby forming a first outer segment 14A and a second outer segment 14B, the first outer segment 14A and second outer segment 14B forming a substantially cylindrical exterior surface 14E; at least one shim structure 16, 18 being formed around the inner member 12 and being disposed at least partially inside the hollow annular outer structure 14, the at least one shim structure having a radially outward facing surface and a radially inward facing surface; and at least one layer 20, 22, 24 of elastomeric material disposed on each of the radially outward facing surface and the radially inward facing surface.
Item 2 -The elastomeric bearing 10 of item 1, wherein: the at least one shim structures 16, 18 comprises: a first shim structure 16 a portion of which has a first spherical contour, the first shim structure 16 being axially split, the first shim structure 16 being formed around the inner member 12 and being disposed at least partially inside the hollow annular outer structure 14; a second shim structure 18 a portion of which has a second spherical contour, the second shim structure 18 being axially split, the second shim structure 18 being formed around the first shim structure 16 and being disposed at least partially inside the hollow annular outer structure 14; and wherein the at least one layer 20, 22, 24 of elastomeric material comprises: a first layer 20 of elastomeric material bonded to the inner member 12 and the first shim structure 16 and extending continuously along the first shim structure 16; a second layer 22 of the elastomeric material bonded to the first shim structure16 and the second shim structure 18 and extending continuously along the second shim structure 18; and a third layer 24 of the elastomeric material bonded to the second shim structure 18 and the hollow outer structure 14 and extending continuously along the hollow outer structure.
Item 3 - The elastomeric bearing 10 of item 2, wherein in a relaxed state the first outer segment 14A and the second outer segment 14B being separated by a first gap G1 and a second gap G2, wherein each of the first gap G1 and the second gap G2 is of a magnitude sufficient to allow the first outer segment 14A and the second outer segment 14B to engage each other in a compressed state to compress the first outer segment 14A and the second outer segment 14B over the first layer 20, the second layer 22 and the third layer 24 of the elastomeric material to a predetermined compression and to configure the cylindrical exterior surface of the outer structure 14 for press fitting into a bore of a housing and maintaining the outer structure in a fixed relation to the housing.
Item 4 - The elastomeric bearing 10 of item 1, wherein the first outer segment 14A and a second outer segment 14B abut one another along circumferentially facing surfaces thereof.
Item 5 - The elastomeric bearing 10 of item 4, wherein the abutment of first outer segment 14A and a second outer segment 14B is configured to limit compressive forces on the at least one layer 20, 22, 24 of elastomeric material.
Item 6 - The elastomeric bearing 10 of item 4, wherein the abutment of first outer segment 14A and a second outer segment 14B is configured to establish an interference fit of the hollow annular outer structure in a bore of a housing.
Item 7 - The elastomeric bearing 10 of item 1, wherein the at least one shim structure 16, 18 comprises at least two gaps therein which comprise opposing circumferentially facing surfaces that extend axially along the at least one shim structure 16, 18.
Item 8 - The elastomeric bearing 10 of item 7, wherein each of the at least two gaps have a spacing of about 5 mm to about 10 mm.
Item 9 - The elastomeric bearing 10 of item 2, wherein the first shim structure 16 comprises a first shim segment and a second shim segment that are separated from one another by two first spacings each having a magnitude of about 5 mm to about 10 mm.
Item 10 - The elastomeric bearing 10 of item 2, wherein the second shim structure 18 comprises a third shim segment and a fourth shim segment that are separated from one another by two second spacings each having a magnitude of about 5 mm to about 10 mm.
Item 11 - The elastomeric bearing 10 of item 2, wherein the predetermined compression of the first segment 14A and the second segment 14B over the first layer 20, the second layer 22 and the third layer 24 of the elastomeric material causes the outer structure 14 to elastically deform thereby maintaining a radially outward force to maintain the outer structure in a fixed relation to the housing.
Item 12 - The elastomeric bearing 10 of item 2, wherein the predetermined compression of the first segment 14A and the second segment 14B over the first layer 20, the second layer 22 and the third layer 24 of the elastomeric material causes the outer structure to elastically deform thereby maintaining a radially outward force to maintain the outer structure 14 in a fixed relation to the housing when the inner member 12 is rotated up to 30 degrees relative to the outer structure about the central axis C.
Item 13 - The elastomeric bearing 10 of item 2, wherein the hollow outer structure 14 has an interior surface, and the inner member 12, the first shim structure 16, the second shim structure 18, and the interior surface have complementary shapes.
Item 14 - The elastomeric bearing 10 of item 2, wherein the inner member 12 comprises a spherical ball having a first mounting leg 13A and a second mounting leg 13B extending outwardly from the spherical ball in opposite directions.
Item 15 - The elastomeric bearing 10 of item 14, wherein the first mounting leg 13A has a first hole 15A extending therethrough and the second mounting leg 13B has a second hole 15B extending therethrough.
Item 16 - A suspension linkage 30 for a rail car suspension assembly 100, the suspension linkage 30 comprising: an elongate shaft 31 extending between a first end 31A and a second end 31B thereof along a longitudinal axis L; a first head 32A formed proximate to the first end, the first head 32A having a first bearing receiving bore extending through the first head 32A, the first bearing receiving bore 34A defining a first interior receiving surface; a second head 32B formed proximate to the second end 31B, the second head 32B having a second bearing receiving bore extending through the second head , the second bearing receiving bore 34B defining a second interior receiving surface; a first elastomeric bearing 10 and a second elastomeric bearing 10, each comprising: an inner member 12 having a spherical exterior surface and being symmetric about a central axis C; a hollow annular outer structure 14 being axially split thereby forming a first outer segment and a second outer segment, the first outer segment and second outer segment forming a substantially cylindrical exterior surface 14E, the axial split being defined by opposing circumferentially faces on the first outer segment and the second outer segment; at least one shim structure 16, 18 being formed around the inner member 12 and being disposed at least partially inside the hollow annular outer structure 14, the at least one shim structure 16, 18 having a radially outward facing surface and a radially inward facing surface; and at least one layer 20, 22, 24 of elastomeric material disposed on each of the radially outward facing surface and the radially inward facing surface; the first elastomeric bearing 10 being press fit into the first bearing receiving bore 34B such that the cylindrical exterior surface of the outer structure 14 is in fixed frictional engagement with the first interior receiving surface and the opposing circumferentially faces on the first outer segment and the second outer segment abut one another; and the second elastomeric bearing 10 being press fit into the second bearing receiving bore such that the cylindrical exterior surface of the outer structure is in fixed frictional engagement with the second interior receiving surface and the opposing circumferentially faces on the first outer segment and the second outer segment abut one another.
Item 17 - The suspension linkage 30 of item 16, wherein: the at least one shim structures 16, 18 comprises: a first shim structure 16 a portion of which has a first spherical contour, the first shim structure 16 being axially split, the first shim structure being formed around the inner member and being disposed at least partially inside the hollow annular outer structure; a second shim structure 18 a portion of which has a second spherical contour, the second shim structure being axially split, the second shim structure being formed around the first shim structure and being disposed at least partially inside the hollow annular outer structure; and wherein the at least one layer 20, 22, 24 of elastomeric material comprises: a first layer 20 of elastomeric material bonded to the inner member and the first shim structure and extending continuously along the first shim structure; a second layer 22 of the elastomeric material bonded to the first shim structure and the second shim structure and extending continuously along the second shim structure; and a third layer24 of the elastomeric material bonded to the second shim structure and the hollow outer structure and extending continuously along the hollow outer structure.
Item 18 - The suspension linkage 30 of item 17, wherein the first hole of the first elastomeric bearing 10 and the first hole of the second elastomeric bearing 10 are coaxial and the second hole of the first elastomeric bearing and the second hole of the second elastomeric bearing are coaxial.
Item 19 - The suspension linkage 30 of item 16, wherein the first mounting leg 13A of the first elastomeric bearing 10 comprises a first flat surface and first mounting leg of the second elastomeric bearing 10 comprises a second flat surface, the second mounting leg 13B of the first elastomeric bearing 10 comprises a third flat surface and the second mounting leg 13B of the second elastomeric bearing 10 comprises a fourth flat surface; the first flat surface and the second flat surface are parallel to each other; and the third flat surface and the fourth flat surface are parallel to each other.
Item 20 -The suspension linkage 30 of item 17, wherein the predetermined compression of the first segment and the second segment over the first layer 20, the second layer 22 and the third layer 24 of the elastomeric material causes the outer structure 14 to elastically deform.
Item 21 - The suspension linkage 30 of item 16, wherein the fixed frictional engagement of the cylindrical exterior surface of the outer structure 14 within the first interior receiving surface is maintained when the inner member is rotated up to 30 degrees relative to the outer structure about the central axis C.
Item 22 - The suspension linkage 30 of item 16, wherein the fixed frictional engagement of the cylindrical exterior surface of the outer structure 14 within the second interior receiving surface is maintained when the inner member is rotated up to 30 degrees relative to the outer structure about the central axis C.
Item 23. - A jig assembly 50 for installing the first elastomeric bearing 10 and the second elastomeric bearing 10 into the suspension linkage of item 16, the jig assembly 50 comprising: a support system 51 comprising a first annular support 52A and a second annular support 52B, the first annular support 52A having a first pocket 53A, the second annular support 52B having a second pocket 53B, the first annular support 52A being spaced apart from the second annular support 52B, the first annular support having a first lateral opening 54A and the second annular support having a second lateral opening 54B that faces the first lateral opening; a tapered die system 60 comprising a first tapered die 62A and a second tapered die 62B, the first tapered die being removably disposed on the first head and coaxial with the first annular support and the second tapered die being removably disposed on the second head and coaxial with the second annular support; a press arrangement 70 comprising a first annular ram 70A and a second annular ram 70B, the first annular ram having a first lateral slot 71A extending radially therethrough and an opening on a first axial ram-end of the first annular ram, the second annular ram having a second lateral slot 71B extending radially therethrough and an opening on a second axial ram-end of the second annular ram, the first annular ram having a first passage extending axially therethrough, the second annular ram having a second passage extending axially therethrough, the first annular ram being removably disposed coaxially on the first tapered die such that the first lateral slot opens outwardly away from the first tapered die and the second annular ram being removably disposed coaxially on the second tapered die such that the second lateral slot opens outwardly away from the second tapered die; and an alignment rod 80 extending between a first rod-end 80A and a second rod-end 80B, a first portion of the rod proximate the first rod-end 80A being removably disposed in the first lateral slot 71A and a second portion of the rod proximate the second rod-end 80B being removably disposed in the second lateral slot 71B, for alignment of the first hole of the first elastomeric bearing 10 with the first hole of the second elastomeric bearing 10 and for alignment of the second hole of the first elastomeric bearing with the second hole of the second elastomeric bearing.
Item 24 - The jig assembly 50 of item 23, wherein the support system 51 is configured to removably retain the first head 32A of the suspension linkage 30 in the first pocket and the support system 51 is configured to removably retain the second head 32B of the suspension linkage in the second pocket.
Item 25 - The jig assembly 50 of item 23, wherein the first annular ram 70A is configured to force a first of the bearings 10 through the first tapered die 62A thereby compressing the first segment of the outer structure of the first elastomeric bearing 10 against the second segment of the outer structure of the first elastomeric bearing and press fitting the first elastomeric bearing 10 into the first bearing receiving bore 34A; and the second annular ram 70B is configured to force the outer structure of a second elastomeric bearing 10 through the second tapered die 62B thereby compressing the first segment of the outer structure of the second elastomeric bearing 10 against the second segment of the outer structure of the second elastomeric bearing 10 and press fitting the second elastomeric bearing 10 into the second bearing receiving bore 34B.
Item 26 - The jig assembly 50 of item 23, wherein the first passage 74A comprises a first anti-rotation arrangement therein and configured to prevent rotation of the first mounting leg 13A of the first elastomeric bearing 10 when the mounting leg is disposed in the first anti-rotation arrangement; and the second passage 74B comprises an anti-rotation arrangement therein configured to prevent rotation of the first mounting leg 13A of the second elastomeric bearing 10 when the mounting leg is disposed in the second anti-rotation arrangement.
Item 27 - A method of installing bearings 10 in a suspension linkage 30, the method comprising: providing a first elastomeric bearing 10 and a second elastomeric bearing 10; providing a support system 51 comprising a first annular support52A and a second annular support 52B, the first annular support having a first pocket, the second annular support having a second pocket, the first annular support 52A being spaced apart from the second annular support 52B, the first annular support 52A having a first lateral opening 54A and the second annular support 52B having a second lateral opening 54B that faces the first lateral opening; providing a tapered die system 60 comprising a first tapered die 62A and a second tapered die 62B; providing a press arrangement 70 comprising a first annular ram 70A and a second annular ram 70B, the first annular ram 70Ahaving a first lateral slot 71A extending radially therethrough and an opening on a first axial ram-end of the first annular ram, the second annular ram having a second lateral slot 71B extending radially therethrough and opening on a second axial ram-end of the second annular ram, the first annular ram having a first passage extending axially therethrough, the second annular ram having a second passage extending axially therethrough; providing an alignment rod 80 extending between a first rod-end 80A and a second rod-end 80B; providing a suspension linkage 30 for a rail car 100, the suspension linkage 30 comprising an elongate shaft extending between a first shaft-end and a second shaft-end thereof along a longitudinal axis L; a first head formed proximate to the first shaft-end, the first head having a first bearing receiving bore extending through the first head, the first bearing receiving bore defining a first interior receiving surface; and a second head formed proximate to the second shaft-end, the second head having a second bearing receiving bore extending through the second head, the second bearing receiving bore defining a second interior receiving surface; positioning the first head in the first pocket of the first annular support 52A; positioning the second head in the second pocket of the second annular support 52B; positioning the first tapered die on the first head and coaxial with the first annular support 52A; positioning the second tapered die on the second head and coaxial with the second annular support 52B; positioning the first elastomeric bearings 10 over the first tapered die 62A; positioning the second elastomeric bearings 10 over the second tapered die; aligning the first hole of the first elastomeric bearing 10 with the first hole of the second elastomeric bearing 10 and aligning the second hole of the first elastomeric bearing 10 with the second hole of the second elastomeric bearing 10; positioning the first annular ram 70A over the first elastomeric bearing 10 coaxially with the first tapered die such that the first lateral slot opens outwardly away from the first tapered die; positioning the second annular ram 70B over the second elastomeric bearing coaxially with the second tapered die such that the second lateral slot opens outwardly away from the second tapered die; positioning a first portion of the rod proximate the first rod-end in the first lateral slot; positioning a second portion of the rod proximate the second rod-end in the second lateral slot; applying a first force F1 to the first annular ram 70A thereby compressing the first elastomeric bearing 10 in and through the first tapered die and out of the first tapered die into the first bearing receiving bore such that the cylindrical exterior surface of the outer structure is in fixed frictional engagement with the first interior receiving surface of the first head; and applying a second force F2 to the second annular ram thereby compressing the second elastomeric bearing 10 in and through the second tapered die and out of the second tapered die into the second bearing receiving bore such that the cylindrical exterior surface of the outer structure is in fixed frictional engagement with the second interior receiving surface of the second head.

While the present disclosure has been described with reference to various exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. An elastomeric bearing (10) comprising:
an inner member (12) having a spherical exterior surface and being symmetric about a central axis (C);
a hollow annular outer structure (14) being axially split thereby forming a first outer segment (14A) and a second outer segment (14B), the first outer segment (14A) and second outer segment (14B) forming a substantially cylindrical exterior surface (14E);
at least one shim structure (16, 18) being formed around the inner member (12) and being disposed at least partially inside the hollow annular outer structure (14), the at least one shim structure (16, 18) having a radially outward facing surface and a radially inward facing surface; and
at least one layer (20, 22, 24) of elastomeric material disposed on each of the radially outward facing surface and the radially inward facing surface.

2. The elastomeric bearing (10) of claim 1, wherein:
the at least one shim structures (16, 18) comprises:
a first shim structure (16) a portion of which has a first spherical contour, the first shim structure (16) being axially split, the first shim structure being formed around the inner member (12) and being disposed at least partially inside the hollow annular outer structure (14);
a second shim structure (18) a portion of which has a second spherical contour, the second shim structure (18) being axially split, the second shim structure (18) being formed around the first shim structure (16) and being disposed at least partially inside the hollow annular outer structure (14); and
wherein the at least one layer (20, 22, 24) of elastomeric material comprises:
a first layer (20) of elastomeric material bonded to the inner member and the first shim structure (16) and extending continuously along the first shim structure;
a second layer (22) of the elastomeric material bonded to the first shim structure (16) and the second shim structure (18) and extending continuously along the second shim structure (18); and
a third layer (24) of the elastomeric material bonded to the second shim structure (18) and the hollow outer structure (14) and extending continuously along the hollow outer structure (14),
preferably, wherein at least one of:
the first shim structure (16) comprises a first shim segment and a second shim segment that are separated from one another by two first spacings each having a magnitude of about 5 mm to about 10 mm; and
the second shim structure (18) comprises a third shim segment and a fourth shim segment that are separated from one another by two second spacings each having a magnitude of about 5 mm to about 10 mm.

3. The elastomeric bearing (10) according to any one of the preceding claims, wherein in a relaxed state the first outer segment (14A) and the second outer segment (14B) being separated by a first gap G1 and a second gap G2, wherein each of the first gap G1 and the second gap G2 is of a magnitude sufficient to allow the first outer segment (14A) and the second outer segment (14B) to engage each other in a compressed state to compress the first outer segment (14A) and the second outer segment (14B) over the first layer (20), the second layer (22) and the third layer (24) of the elastomeric material to a predetermined compression and to configure the cylindrical exterior surface of the outer structure for press fitting into a bore of a housing and maintaining the outer structure in a fixed relation to the housing.

4. The elastomeric bearing (10) according to any one of the preceding claims, wherein:
the first outer segment (14A) and a second outer segment (14B) abut one another along circumferentially facing surfaces thereof;
the abutment of first outer segment (14A) and a second outer segment (14B) is configured to limit compressive forces on the at least one layer (20, 22, 24) of elastomeric material; or
the abutment of first outer segment (14A) and the second outer segment (14B) is configured to establish an interference fit of the hollow annular outer structure in a bore of a housing.

5. The elastomeric bearing (10) according to any one of the preceding claims, wherein the at least one shim structure (16, 18) comprises at least two gaps therein which comprise opposing circumferentially facing surfaces that extend axially along the at least one shim structure (16, 18), preferably wherein each of the at least two gaps have a spacing of about 5 mm to about 10 mm.

6. The elastomeric bearing (10) according to any one of the preceding claims, wherein the predetermined compression of the first segment and the second segment over the first layer (20), the second layer (22) and the third layer (24) of the elastomeric material causes the outer structure to elastically deform thereby maintaining a radially outward force to maintain the outer structure in a fixed relation to the housing, preferably when the inner member is rotated up to 30 degrees relative to the outer structure about the central axis C.

7. The elastomeric bearing (10) according to any one of the preceding claims, wherein:
the hollow outer structure (14) has an interior surface, and the inner member, the first shim structure, the second shim structure, and the interior surface have complementary shapes; or
the inner member (12) comprises a spherical ball having a first mounting leg (13A) and a second mounting leg (13B) extending outwardly from the spherical ball in opposite directions, preferably wherein the first mounting leg (13A) has a first hole (15A) extending therethrough and the second mounting leg (13B) has a second hole (15B) extending therethrough.

8. A suspension linkage (30) for a rail car suspension assembly (100), the suspension linkage comprising:
an elongate shaft (31) extending between a first end (31A) and a second end (31B) thereof along a longitudinal axis L;
a first head (32A) formed proximate to the first end, the first head (32A) having a first bearing receiving bore extending through the first head (32A), the first bearing receiving bore (34A) defining a first interior receiving surface;
a second head (32B) formed proximate to the second end, the second head (32B) having a second bearing receiving bore extending through the second head (32B), the second bearing receiving bore (34B) defining a second interior receiving surface;
a first elastomeric bearing (10) according to any one of the preceding claims and a second elastomeric bearing (10) according to any one of the preceding claims;
the first elastomeric bearing (10) being press fit into the first bearing receiving bore (34A) such that the cylindrical exterior surface of the outer structure is in fixed frictional engagement with the first interior receiving surface and the opposing circumferentially faces on the first outer segment and the second outer segment abut one another; and
the second elastomeric bearing (10) being press fit into the second bearing receiving bore (34B) such that the cylindrical exterior surface of the outer structure is in fixed frictional engagement with the second interior receiving surface and the opposing circumferentially faces on the first outer segment and the second outer segment abut one another.

9. The suspension linkage (30) of claim 8, wherein at least one of:
a first hole of the first elastomeric bearing (10) and a first hole of the second elastomeric bearing (10) are coaxial and a second hole of the first elastomeric bearing (10) and a second hole of the second elastomeric bearing (10) are coaxial; and
predetermined compression of the first segment and the second segment over the first layer (20), the second layer (22) and the third layer (24) of the elastomeric material causes the outer structure to elastically deform.

10. The suspension linkage (30) of claim 8, wherein:
(a) the first mounting leg (13A) of the first elastomeric bearing (10) comprises a first flat surface and first mounting leg (13A) of the second elastomeric bearing (10) comprises a second flat surface, the second mounting leg (13B) of the first elastomeric bearing (10) comprises a third flat surface and the second mounting (13B) leg of the second elastomeric bearing (10) comprises a fourth flat surface;
the first flat surface and the second flat surface are parallel to each other; and
the third flat surface and the fourth flat surface are parallel to each other; or
(b) the fixed frictional engagement of the cylindrical exterior surface of the outer structure within the first interior receiving surface is maintained when the inner member (12) is rotated up to 30 degrees relative to the outer structure about the central axis C; or
(c) the fixed frictional engagement of the cylindrical exterior surface of the outer structure within the second interior receiving surface is maintained when the inner member (12) is rotated up to 30 degrees relative to the outer structure about the central axis C.

11. A jig assembly (50) for installing the first elastomeric bearing (10) and the second elastomeric bearing (10) into the suspension linkage of claim 8, the jig assembly comprising:
a support system (51) comprising a first annular support (52A) and a second annular support (52B), the first annular support having a first pocket (53A), the second annular support (52B) having a second pocket (53B), the first annular support (52A) being spaced apart from the second annular support (52B), the first annular support having a first lateral opening (54A) and the second annular support having a second lateral opening (54B) that faces the first lateral opening;
a tapered die system (60) comprising a first tapered die (62A) and a second tapered die (62B), the first tapered die being removably disposed on the first head and coaxial with the first annular support and the second tapered die being removably disposed on the second head and coaxial with the second annular support;
a press arrangement (70) comprising a first annular ram (70A) and a second annular ram (70B), the first annular ram having a first lateral slot (71A) extending radially therethrough and an opening on a first axial ram-end of the first annular ram, the second annular ram (70B) having a second lateral slot (71B) extending radially therethrough and an opening on a second axial ram-end of the second annular ram, the first annular ram having a first passage (74A) extending axially therethrough, the second annular ram (70B) having a second passage (74B) extending axially therethrough, the first annular ram being removably disposed coaxially on the first tapered die such that the first lateral slot (71A) opens outwardly away from the first tapered die and the second annular ram being removably disposed coaxially on the second tapered die such that the second lateral slot (71B) opens outwardly away from the second tapered die; and
an alignment rod (80) extending between a first rod-end (80A) and a second rod-end (80B), a first portion of the rod proximate the first rod-end (80A) being removably disposed in the first lateral slot (71A) and a second portion of the rod proximate the second rod-end (80B) being removably disposed in the second lateral slot (71B), for alignment of the first hole of the first elastomeric bearing (10) with the first hole of the second elastomeric bearing (10) and for alignment of the second hole of the first elastomeric bearing with the second hole of the second elastomeric bearing.

12. The jig assembly (50) of claim 11, wherein the support system (51) is configured to removably retain the first head (32A) of the suspension linkage (30) in the first pocket and the support system (51) is configured to removably retain the second head (32B) of the suspension linkage in the second pocket.

13. The jig assembly (50) according to any one of claims 11-12, wherein the first annular ram (70A) is configured to force a first of the bearings (10) through the first tapered die (62A) thereby compressing the first segment of the outer structure of the first elastomeric bearing (10) against the second segment of the outer structure of the first elastomeric bearing (10) and press fitting the first elastomeric bearing (10) into the first bearing receiving bore (34A); and
the second annular ram (70B) is configured to force the outer structure of a second elastomeric bearing (10) through the second tapered die (62B) thereby compressing the first segment of the outer structure of the second elastomeric bearing (10) against the second segment of the outer structure of the second elastomeric bearing (10) and press fitting the second elastomeric bearing into the second bearing receiving bore (34B).

14. The jig assembly (50) according to any one of claims 11-13, wherein the first passage (74A) comprises a first anti-rotation arrangement therein and configured to prevent rotation of the first mounting leg (13A) of the first elastomeric bearing (10) when the mounting leg is disposed in the first anti-rotation arrangement; and
the second passage (74B) comprises an anti-rotation arrangement therein configured to prevent rotation of the first mounting leg (13A) of the second elastomeric bearing (10) when the mounting leg is disposed in the second anti-rotation arrangement.

15. A method of installing bearings in a suspension linkage (30) according to claim 8, the method comprising:
providing a first elastomeric bearing (10) and a second elastomeric bearing (10);
providing a support system (51) comprising a first annular support (52A) and a second annular support (52B), the first annular support (52A) having a first pocket, the second annular support (52B) having a second pocket, the first annular support (52A) being spaced apart from the second annular support (52B), the first annular support having a first lateral opening (54A) and the second annular support having a second lateral opening (54B) that faces the first lateral opening;
providing a tapered die system (60) comprising a first tapered die (62A) and a second tapered die (62B);
providing a press arrangement (70) comprising a first annular ram (70A) and a second annular ram (70B), the first annular ram having a first lateral slot (71A) extending radially therethrough and an opening on a first axial ram-end of the first annular ram, the second annular ram having a second lateral slot (71B) extending radially therethrough and opening on a second axial ram-end of the second annular ram, the first annular ram having a first passage extending axially therethrough, the second annular ram having a second passage extending axially therethrough;
providing an alignment rod (80) extending between a first rod-end (80A) and a second rod-end (80B);
providing the suspension linkage (30) for a rail car (100);
positioning the first head in the first pocket of the first annular support (52A);
positioning the second head in the second pocket of the second annular support (52B);
positioning the first tapered die (62A) on the first head and coaxial with the first annular support (52A);
positioning the second tapered die (62B) on the second head and coaxial with the second annular support (52B);
positioning the first elastomeric bearings (10) over the first tapered die (62A);
positioning the second elastomeric bearings (10) over the second tapered die (62B);
aligning the first hole of the first elastomeric bearing (10) with the first hole of the second elastomeric bearing (10) and aligning the second hole of the first elastomeric bearing (10) with the second hole of the second elastomeric bearing (10);
positioning the first annular ram (70A) over the first elastomeric bearing coaxially with the first tapered die such that the first lateral slot opens outwardly away from the first tapered die;
positioning the second annular ram (70B) over the second elastomeric bearing coaxially with the second tapered die such that the second lateral slot opens outwardly away from the second tapered die;
positioning a first portion of the rod proximate the first rod-end in the first lateral slot;
positioning a second portion of the rod proximate the second rod-end in the second lateral slot;
applying a first force (F1) to the first annular ram (70A) thereby compressing the first elastomeric bearing (10) in and through the first tapered die and out of the first tapered die into the first bearing receiving bore (34A) such that the cylindrical exterior surface of the outer structure is in fixed frictional engagement with the first interior receiving surface of the first head; and
applying a second force (F2) to the second annular ram thereby compressing the second elastomeric bearing (10) in and through the second tapered die and out of the second tapered die into the second bearing receiving bore (34B) such that the cylindrical exterior surface of the outer structure is in fixed frictional engagement with the second interior receiving surface of the second head.
